## Europäisches Patentamt
## European Patent Office
## Office européen des brevets

(11) Publication number: **0 181 850**
**A1**

(12) **EUROPEAN PATENT APPLICATION**

(21) Application number: **85870112.1**

(22) Date of filing: **12.08.85**

(51) Int. Cl.⁴: **B 01 D 13/04**
**B 01 D 53/22**

(30) Priority: **13.08.84 US 640055**

(43) Date of publication of application:
**21.05.86 Bulletin 86/21**

(84) Designated Contracting States:
**AT BE DE FR GB IT NL SE**

(71) Applicant: **Monsanto Company**
**Patent Department 800 North Lindbergh Boulevard**
**St. Louis Missouri 63167(US)**

(72) Inventor: **Kraus, Menahem Alfred**
**603 Waters Edge**
**Ann Arbor Michigan 48105(US)**

(74) Representative: **McLean, Peter et al,**
**Monsanto Europe S.A. Patent Department Avenue de**
**Tervuren 270-272 Letter Box No 1**
**B-1150 Brussels(BE)**

(54) **Composite fluid separation membranes.**

(57) Membranes which have a non-porous intermediate layer (8) between a separating layer (2) and a porous support (4) are taught wherein the in situ-formed non-porous intermediate layer (8) positioned between a porous support (4) and an in situ-formed separating layer (2), results in composite fluid separation membranes having improved permeability for the separation of fluids. The highly permeable intermediate layer (8) provides spacing between the separating layer (2) and the porous support (4) which creates a funnel effect (12, 14) for the fluid from the separating layer (2) to the pores (6) of the porous substrate (4).

FIG. 4.

## COMPOSITE FLUID SEPARATION MEMBRANES

This invention relates to composite fluid separation membranes which have a non-porous intermediate layer between the separating layer and the porous support.

### PRIOR ART

Klass, et al, U.S. Patent No. 3,616,607, Stancell, et al., U.S. Patent No. 3,657,113 and Yasuda, U.S. Patent No. 3,775,308 exemplify gas separation membranes having superimposed membranes on a porous support.

A technique has also been developed of casting very thin polymer films on water, then to be picked up on porous supports. Since the films are very hard to handle, multiple applications have to be made and the technique is very hard to scale up.

Such composite membranes for gas separations have not been without other problems. For instance, Browall in U.S. Patent No. 3,980,456 discloses the fabrication of composite membrane films for separation of oxygen from air comprising a support of microporous polycarbonate sheet and a separately formed, i.e., preformed, superimposed ultrathin separation membrane. A preformed organopolysiloxane-polycarbonate copolymer sealing material in layer form is laid over the ultrathin membrane to cover any holes in the ultrathin layer.

U.S. Patent 4,230,463 discloses a multi-component membrane having a porous substrate which supports a thin separating layer.

In summary, it appears that composite membranes for gas separation which have a superimposed membrane to provide the selective separation have achieved only slight or modest improvement in membrane performance, and there appears to be no successful, large scale commercial application of these gas separation membranes.  Moreover, the superimposed membrane, although possibly ultrathin may have significantly reduced selectivity compared to the material of the superimposed membrane due to small imperfections.

## BACKGROUND AND DEFINITION OF TERMS

The separation factor with respect to a given pair of gases for a given membrane can be determined employing numerous techniques which provide sufficient information for calculation of permeability constants or permeabilities for each of the pair of gases.  Several of the many techniques available for determining permeability constants, permeabilities, and separating factors is disclosed by Hwang, et al, Techniques of Chemistry, Volume VII, Membranes in Separations, John Wiley & Sons, 1975 (herein incorporated by reference) at Chapter 12, pages 296 to 322.

An "intrinsic separation factor" as referred to herein is the separation factor for a material which has no pores for fluid flow across the material, and is the highest achievable separation factor for the material.  Such a material may be referred to as being continuous or non-porous.  The intrinsic separation factor of a material can be approximated by measuring the separation factor of a relatively thick compact membrane of the material.  However, several difficulties may exist in the determination of an intrinsic separation factor including imperfections introduced in the preparation of the compact membrane such as the presence of pores, the presence of fine particles in the compact membrane, undefined molecular order due to variations in membrane preparation, and the like.  Consequently, the "determined intrinsic separation factor" can, because of pores or other defects in the membrane, be lower than the intrinsic separation factor.  Accordingly, the "determined intrinsic separation factor" as employed herein refers to the measured separation factor of a dry, relatively thick compact membrane of the material.

A useful characteristic with respect to gas or fluid separations composite membranes is the effective pore size of the porous support, especially where the permeability of the material of the porous support is poor. If the separating layer is applied directly onto the surface of a porous support the effective area of the separating layer, with respect to a given pore in the substrate, is the same as the cross-sectional area of the pore. In this invention, a layer of material having a high permeability is interposed between the porous support and the separating layer. This interposed layer causes gas to pass through the layer along a funnel-shaped path, with the pore in the substrate corresponding to the neck of the funnel and the effective area of the separating layer corresponding to the open upper end of the funnel. Since the surface area of a cylindrical fiber is a function of the square of the fiber radius, the effective cross-sectional area of the pore is a function of the square of the thickness of the highly permeable interposed layer. This effectively magnifies the effective size of the pore and is referred to herein as the "funnel effect".

BRIEF STATEMENT OF THE INVENTION

The composite fluid separation membrane in accordance with this invention with respect to at least one gas provides a permeability which is improved through the use of a non-porous intermediate layer comprised of a polymer material which is extremely permeable to gases, and of low selectivity. Interposing such a thin intermediate layer of such a polymer between the porous support and the thin, dense selective layer has a number of beneficial effects such as allowing the thin separating layer to withstand reasonable differential pressure. For such a thin separating layer to withstand differential pressures without the intermediate layer, the separating layer's thickness must be at least equal to the pore diameter of the porous support. The intermediate layer is non-porous, thus, in effect creates an essentially non-porous support combination for the separating layer. While this membrane may be used for separating fluids which are liquids or gases, its preferred use is in separating one gas from a mixture of gases.

### DETAILED DESCRIPTION OF THE INVENTION

Generally, organic polymers or organic polymers mixed with inorganics are used to prepare the separating layer of this invention. Typical polymers suitable for the separation membrane according to the invention can be substituted or unsubstituted crosslinked or uncross-linked polymers and may be selected from polysulfones, poly(styrenes), including styrene-containing copolymers such as acrylonitrilestyrene copolymers, styrene-butadiene copolymers and styrene-vinyl(benzylhalide copolymers); polycarbonates; cellulosic polymers, such as cellulose acetate, cellulose acetate-butyrate, cellulose propionate, ethyl cellulose, methyl cellulose, nitrocellulose, etc.; polyamides and polyimides, including aryl polyamides and aryl polyimides; polyethers; poly-(arylene oxides) such as poly(phenylene oxide), substituted poly(phenylene oxides) and poly(xylene oxide); poly(esteramide-diisocyanate); polyurethanes; polyesters (including polyarylates), such as poly(ethylene terephthalate), poly(alkyl methacrylates), poly(acrylates), poly(phenylene terephthalate), etc.; polysulfides, polymers from monomers having alpha-olefinic unsaturation other than mentioned above such as poly(ethylene), poly(propylene), poly(butene-1), poly(4-methyl pentene-1), polyvinyls, e.g., poly(vinyl chloride), poly(vinyl fluoride), poly(vinylidene chloride), poly(vinylidene fluoride), poly(vinyl alcohol), poly(vinyl esters) such as poly(vinyl acetate) and poly(vinyl propionate), poly(vinyl pyridines), poly(vinyl pyrrolidones), poly(vinyl ethers), poly(vinyl ketones), poly(vinyl aldehydes) such as poly(vinyl formal) and poly(vinyl butyral), poly(vinyl amides), poly(vinyl amines), poly(vinyl urethanes), poly(vinyl ureas), poly(vinyl phosphates) and poly(vinyl sulfates); poly(vinyl silanes) poly-alkyls; poly(benzobenzimidazole); polyhydrazides; polyoxadiazoles, polytriazoles, poly(benzimidazole); polycarbodiimides; etc., and interpolymers, including block interpolymers containing repeating units from the above such as interpolymers of acrylonitrile-vinyl bromide-sodium salt of para-sulfophenylmethallyl ethers; and grafts and blends containing any of the foregoing. Typically substituents providing substituted polymers include halogens such as fluorine, chlorine and bromine, hydroxyl groups; lower alkyl groups; lower alkoxy groups; monocyclic aryl; lower acyl groups and the like. The weight percent of polymer in the solution of the separating layer solution may vary widely but is generally in the range from about 0.1 percent to no more than about 10 percent by weight. The solution containing the polymeric material which forms the separating layer must be of a nature which will sufficiently wet the intermediate non-porous layer in order to provide suitable contact with the insitu formed separating layer to the intermediate layer. Suitable solvents for the solution containing the polymeric material which forms the separating layer include its solvents which have sufficient solubility to form coating solutions of the polymeric materials of the separating layer. These solvents can be selected from normally liquid alkanes, alcohols, ketones, some substituted alkanes, alcohols, ketones and the like; and mixtures thereof.

Generally organic polymers or organic polymers mixed with inorganics, or inorganic materials are suitable for the preparation of the porous support according to the invention. Typical polymers suitable for the porous support according to the invention can be substituted or unsubstituted, cross-linked or uncross-linked polymers as well as copolymers and mixtures thereof. Typical polymers suitable for the porous support are porous membrane materials prepared from the same polymers which are suitable for forming the separating layer. Other suitable porous supports or substrates are inorganics such as porous glass, porous metal, porous ceramics and the like.

The materials for the intermediate non-porous layer may be natural or synthetic substances, and are often polymers, and advantageously exhibit the appropriate properties to provide non-porous contact with the porous support. Synthetic substances include both addition and condensation polymers. Typical of the useful materials which can comprise the intermediate are polymers which can be substituted or unsubstituted and include synthetic rubbers, natural rubbers, organic prepolymers, poly(siloxanes) (silicone polymers); polysilazanes; polyurethanes; poly(epichlorhydrin); polyamines; polyimines; polyamides; acrylonitrile-containing copolymers such as poly(a-chloroacrylonitrile) copolymers; polyesters (including polyactams and polyarylates), e.g., poly(alkyl acrylates) and poly(alkyl methacrylates) wherein the alkyl groups have, say, 1 to about 8 carbons; polysebacates, polysuccinates, and alkyl resins; terpinoid resins;

linseed oil; cellulosic polymers; polysulfones, especially aliphatic-containing polysulfones; poly-(alkylene glycols) such as poly(ethylene glycol), poly(propylene glycol), etc.; poly(alkylene); poly-sulfates; polypyrrolidones; polymers from monomers have a olefinic unsaturation such as poly(olefins), e.g., poly(ethylene), poly(propylene), poly(butadiene), poly(2,3-dichlorobutadiene), poly(isoprene), poly-(chloroprene) poly(styrene) including poly(styrene) copolymers, e.g., styrene-butadiene copolymer, polyvinyls such as poly(vinyl alcohols), poly(vinyl aldehydes) [e.g., poly(vinyl formal) and poly(vinyl butyral),] poly(vinyl ketones) [e.g., poly(methylvinyl-ketone),] poly(vinyl esters) [e.g., poly(vinyl benzoate),] poly(vinyl halides) [e.g., poly(vinyl bromide),] poly(vinylidene halides), poly(vinylidene carbonate), poly(N-vinylmaleimide), etc., poly(1,5-cyclooctadiene), poly(methylisopropenylketone), fluorinated ethylene copolymer; poly(arylene oxides), e.g., poly(xylylene oxide); polycarbonates; poly-(organophosphazenes); poly(vinyl silanes); poly(silyl-acetylenes); polyphosphates, e.g., poly(ethylene-methylphosphate); and the like, and any interpolymers including block interpolymers containing repeating units from the above, and grafts and blends containing any of the foregoing. The polymers may or may not be cross linked after application to the porous separation membrane.

The solution containing the polymeric material which forms the intermediate non-porous layer must be of such a nature to sufficiently wet the porous support or porous support impregnated with suitable solvent in order to provide suitable contact of the in situ formed intermediate layer to the porous support. Suitable solvents for the solution containing the polymeric material which forms the intermediate non-porous layer include normally liquid alkanes; aliphatic alcohols; aliphatic ketones; some halogenated alkanes; dialkylethers; and the like; and mixtures thereof.

The solution containing the polymeric material which forms the separating layer must be of a nature which will sufficiently wet the intermediate non-porous layer in order to provide suitable contact with the in situ formed separating layer to the intermediate layer. Suitable solvents for the solution containing the polymeric material which forms the separating layer include its solvents which have sufficient solubility to form coating solutions of the polymeric materials of the separating layer. These solvents can be selected from normally liquid alkanes, alcohols, ketones, some substituted alkane, alcohols, ketones and the like; and mixtures thereof.

Optionally, the composite membrane consisting of a porous substrate, intermediate layer and separating layer, can be insitu coated with one or more additional layers of a highly permeable, non-selective polymer to further improve selectivity. The additional layer can be of a material identical to or different from that of the intermediate layer. The selectivity and permeability relationships of the additional coating to those of the separating layer are the same as those of the intermediate layer. The thickness of the composite membrane will be within the range of $200 \times 10^{-10}$ to $15,000 \times 10^{-10}$ meters.

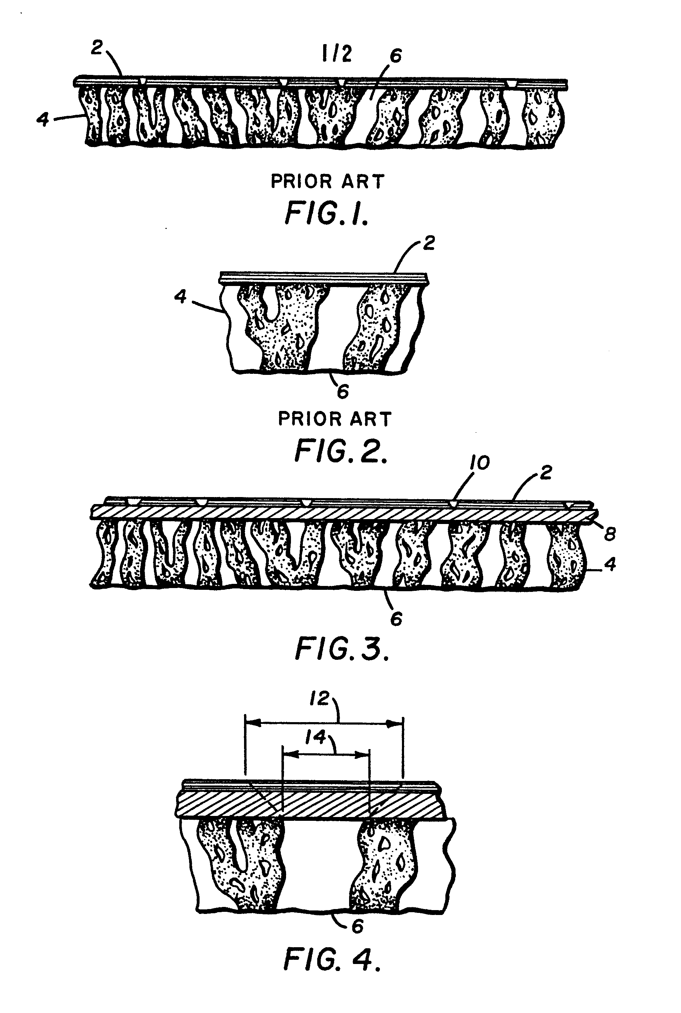

For a better understanding of the invention of the improved composite gas separation membrane, reference is made to Figures 3, 4 and 6 which are in accordance with the invention and comparative Figures of 1, 2 and 5 which are in accordance with the prior art. Prior art Figure 1 illustrates a typical composite separation membrane wherein a separating layer 2

0181850

is in contact with a porous support 4 having continuous pores 6. Figure 2 is an expanded view of a segment of Figure 1 more clearly illustrating the relationship of a thin separating layer coating in contact with the porous support 4. The composite gas separation membrane in accordance with the invention is illustrated by Figure 2 wherein the intermediate non-porous layer 8 is shown in position between the separating layer 2 and porous support 4. In addition defects 10 of the dense separating layer 2 are also indicated said defects extending through the coating of the separating layer. The defects are effectively sealed by the intermediate layer. Figure 4 is an enlarged segment of the improved composite gas separation membrane of Figure 2 wherein the effective pore size 12 is illustrated relative to the actual pore opening of pore 6. The spacing allowed by the intermediate layer 8 allows the gas being separated by separating layer 2 to funnel or more freely transmit to the pore 6 for flow through the membrane; thus, the effective pore size dimension 12 which is substantially larger than the actual pore size 14. Regarding Figure 2 of the prior art representation, the gas would substantially be transmitted through actual pore size opening and not have the benefit of the funneling effect.

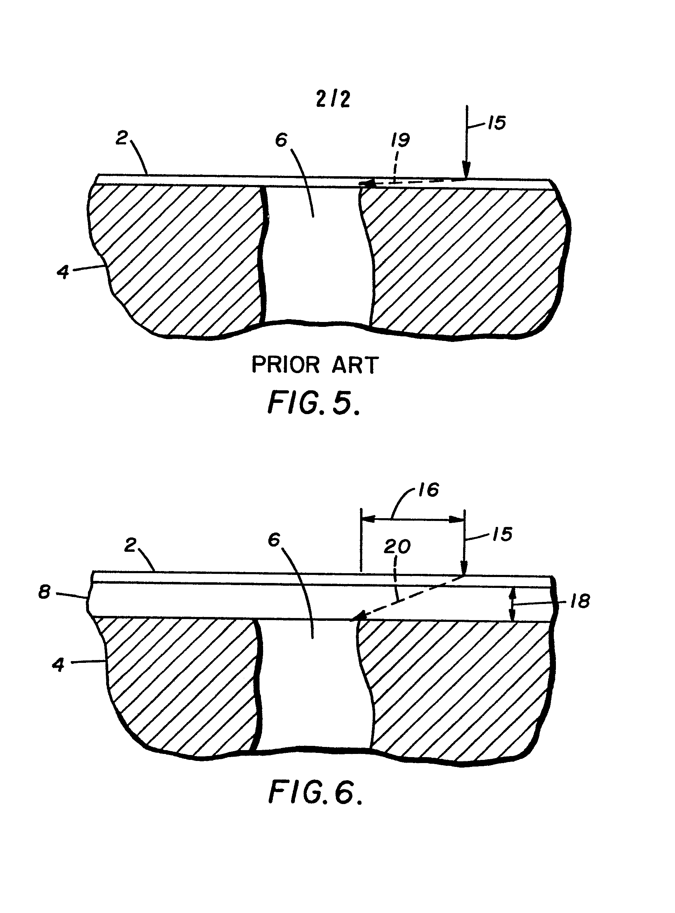

Figure 5 is a further expanded view of a segment of Figure 2 more clearly illustrating the relationship of a thin separating layer coating in contact with the porous support 4 and gas flow route 15 and 19 in order to reach pore 6. The gas molecule must travel the distance of route 19 through the highly selective, but low permeable material of the separating layer. When comparing the gas flow routes 15 and 19 of Figure 5 to routes 15 and 20 of Figure 6, the funnel effect or enlarged effective pore size can be realized. Assuming, for example, in comparing Figures 5 and 6 a permeability rate for coating 2 of 2 and a rate of 10 for intermediate layer 8, an intermediate layer thickness 18 of 1 and a length for route 19 of 3. The $(P/\ell)$ for the separating element of the separating layer 2 in Figure 5 would be 2/3 = 0.67 as compared to the $(P/\ell)$ for the separating element of the separating layer 2 in Figure 6 of 10/3.16 = 3.16. These figures are for comparative use; however, such figures could be based on true comparative units.

Preferred polymers for the intermediate layer are silicones, polyfluorophosphazenes, poly(vinyl silanes), and polysilylacetylenes. Preferred examples of porous substrates are porous polypropylene, porous glass, porous polysulfone and the like. Preferred examples of separating polymers are cellulose acetate, polysulfone, polyethersulfone, polyimides and polyphenylene oxide and its derivatives. The important factors in applying the in situ-formed intermediate non-porous layer and the in situ-formed separating layer involve good wetting technique, hence low interfacial surface tension of, for example, the porous support by the intermediate polymer solution and of the intermediate non-porous layer by the separating layer polymer solution.

A separation factor (a/b), $\alpha$, for a membrane for a given pair of gases a and b is defined as the ratio of the permeability constant $(P_a)$ of the membrane for gas a to the permeability constant $(P_b)$ of the membrane for gas b. A separation factor, alpha, is also equal to the ratio of the reduced permeability, $P/\ell$, $(P_a/\ell)$ of a membrane of thickness 1 for gas a of a gas mixture to the reduced permeability of the same membrane to gas b, $(P_b/\ell)$, wherein the permeability for a given gas is the volume of gas at standard temperature and pressure (STP), which passes through a membrane per square centimeter of surface area, per second, for a partial pressure drop of 1 centimeter of mercury across the membrane per unit of thickness, and is expressed as $P = cm^3 - cm/cm^2 - sec - cmHg$.

### EXAMPLES

The following table illustrates twenty examples, fifteen of which are in accordance with the invention. Examples 2, 4, 12, 16 and 18 are for purposes of comparison and are not in accordance with the invention. The membranes of examples 2, 4, 12, 16 and 18 do not include an intermediate non-porous layer while the remaining thirteen examples illustrate various intermediate non-porous layers and the functionality of same as gas separators for $CO_2$/methane and oxygen/nitrogen. In addition, various separating layers of polymeric materials are used in combination with the various intermediate layers. As can be seen from the examples, Examples 2, 4, 12 and 18 have separation factors for carbon dioxide/methane of about 1 indicating that little or no selectivity was achieved due to imperfections in the dense separating layer.

Example 16 has a separation factor for carbon dioxide/methane of 8 indicating that the separating layer of polyphenylene oxide has fewer defects than the separating layers of examples 2, 4, 12 and 18, however, permeability is quite low. The intermediate layer combination of Examples 17 and 19, both achieved substantial increases in permeability and separation factors over the results of comparative Examples 16 and 18.

The same separating layer, that is a separating layer produced in the same manner as in Example 2, was utilized in Example 1 in combination with the intermediate non-porous layer illustrating for the same separating layer and substrate, a separation factor for carbon dioxide/methane of 19. The polyethersulfone separating layer of Example 3 in combination with the intermediate layer provides a separation factor for carbon dioxide/methane of 15 to 16 while the same separating layer on the same porous substrate without the intermediate layer has a separation factor of 1, i.e., no separation.

Example 14 illustrates an additional aspect of the inventive composite membrane wherein an additional top coating over the separating layer is applied with the resulting composite membrane having very desirable $CO_2$ methane separation factor of 40 and a P/ℓ for $CO_2$ of 46. Example 15 illustrates the use of a composite membrane according to the invention wherein composite membrane has a separation factor for oxygen/nitrogen of 3.5 and a P/ℓ for oxygen of 30.

The composite membranes of Examples 1, 3, 5 through 11, 13, 14, 15, 17, 19 and 20 were prepared in the following manner. A porous support membrane in the form of a porous polypropylene in sheet form was impregnated with toluene to completely fill the pores. Before the toluene evaporated the impregnated membrane was covered with a 2% by weight solution of poly(trimethylsilyl propyne) in cyclohexane. Excess solution was drained from the membrane and all solvents were allowed to evaporate. The membrane thus coated with the poly(trimethylsilyl propyne) was dried at room temperature to about 40° C. in a vacuum oven. The membrane was then coated with a separating layer in essentially the same manner. The membrane was then coated with a 0.5 to 2% solution of separating polymer in a solvent which is a non-solvent for both the porous support and the intermediate layer such as dichloroethane. Excess solution was drained and the solvent evaporated to yield the finished composite membrane.

Performance testing of the membranes as illustrated in the table, examples 1 through 20 was conducted in a standard test cell wherein the membrane is clamped into position with one side of the membrane at vacuum 5-25 Pascals (30-200 μHg) and the other side under pressure of the test gas mixture of approximately 66,600 to 200,000 Pascals (50-150 centimeters) mercury. The feed composition for the standard test cell is comprised of air for Example 20 and an approximate ratio of 25%/75% by volume of $CO_2$ and $CH_4$ for Examples 1-19. After an equilibrium period the permeability was determined by following the pressure rise on the low pressure side of the membrane as a function of time. Selectivity was calculated by determining the composition of the permeated gas and comparing same to the feed gas composition. In Example 10, PES is polyether sulfone.

TABLE

| Example | Porous Polypropylene (Celgard 2402) | Intermediate Layer | Separating Layer | $(P/\ell)CO_2 \times 10^6$ | $\alpha CO_2/CH_4$ |
|---|---|---|---|---|---|
| 1 | " | $[(CF_3CH_2O)_2P=N]$ | Cellulose Triacetate 0.5% | 17 | 19 |
| 2 | " | - | - | Very High | 1 |
| 3 | " | $[(CF_3CH_2O)_2P=N]$ | PES 2% | 5.5 | 15-16 |
| 4 | " | - | " | Very High | 1 |
| 5 | " | $[(CF_3CH_2O)_2P=N]$ | Cellulose Triacetate 2% | 3 | 29 |
| 6 | " | $NH_2(CH_2)_2NH$- $-(CH_2)_2N(CH_2)_2Si=$ Silicone | Cellulose Triacetate 1% | 13 | 15 |
| 7 | " | " | Cellulose Triacetate 0.5% | 25 | 12-13 |
| 8 | " | "Ethyl Silicate" silicone | Cellulose Triacetate 1% | 12 | 18 |
| 9 | " | $\{C=C\}$  $CH_3 \ Si(CH_3)_3$ | Cellulose Triacetate | 26 | 28 |

36-21(500d)81850

| Example | Porous Polypropylene (Celgard 2402 | Intermediate Layer | Separating Layer | $(P/\ell)CO_2 \times 10^6$ | $\alpha CO_2/CH_4$ |
|---|---|---|---|---|---|
| 10 | " | $\fancy{c = c}$ $CH_3$ $Si(CH_3)_3$ | Polyethersulfone | 20 | 22 |
| 11 | " | " | Polyimide | 24 | 41 |
| 12 | " | -- | Polyimide | Very high | 1.1 |
| 13 | " | $\fancy{c = c}$ $CH_3$ $Si(CH_3)_3$ | Polyphenylene Oxide | 134 | 13 |
| 14 | " | " | Brominated Polyphenylene Oxide | 40 | 16 |
| 15* | " | " | Polyimide | 46 | 40 |
| 16 | " | -- | Polyphenylene Oxide | 18 | 8 |

* top coated with fluorophosphazene

36-21(5070)A0181850

| Example | Porous Polypropylene (Celgard 2402 | Intermediate Layer | Separating Layer | $(P/\ell)CO_2 \times 10^6$ | $\alpha CO_2/CH_4$ |
|---|---|---|---|---|---|
| 17 | " | $\{C = C\}$ $CH_3$ $Si(CH_3)_3$ | Polyphenylene Oxide | 133 | 13 |
| 18 | " | -- | Polysulfone | 4.3 | 1.3 |
| 19 | " | $\{C = C\}$ $CH_3$ $Si(CH_3)_3$ | Polysulfone | 17-33 | 21-23 |
| 20 | " | $NH_2(CH_2)_3Si$-Silicone | Poly(methylpentene) | $(P/\ell)O_2 \times 10^6$ | $\alpha O_2/N_2$ |
| | | | | 30 | 3.5 |

36-21(507Q) 0181850

CLAIMS:

1.    A composite fluid separation membrane comprising:

(a)  a porous support having pores extending there through;

(b)  an in situ-formed intermediate non-porous layer which is in contact with the porous support on the first side;

(c)  an in situ-formed separating layer in contact with a second side of the non-porous intermediate layer, the intermediate layer having a determined intrinsic separation factor for one fluid relative to at least one other fluid of the mixture fluid which is less than the determined intrinsic separation factor of the material of the separating layer for the one fluid, wherein the composite porous support has an effective mean pore size which is greater than the actual pore size of the porous support, and the composite fluid separation membrane has a greater permeability for the one fluid than the permeability for the one fluid of a composite fluid separation membrane comprised of the porous support and the separating layer.

2.    A composite fluid separation membrane according to Claim 1 wherein the square of the effective pore size increases as a function of the square of the intermediate layer thickness.

3.    A composite gas separation membrane according to Claim 1 wherein the gas is selected from the group consisting of carbon monoxide, nitrogen, argon, methane, ethane, carbon dioxide, hydrogen sulfide, acid gases, and hydrogen, the effective separating thickness of the composite gas separation membrane varies from about $200 \times 10^{-10}$ to about $15,000 \times 10^{-10}$ meters.

4.   A composite fluid separation membrane according to Claim 3 wherein the effective pore size increases as a function of the square of the intermediate layer thickness.

5.   The composite gas separation membrane of Claim 3 in which the ratio of the separation factors for the one gas of the in situ-formed intermediate non-porous layer relative to the in situ-formed separating layer is within the range of about 0.01 to about 0.8.

6.   The composite gas separation membrane of Claim 3 in which the permeability exhibited by the composite gas separation membrane is at least about 25% greater than the permeability of a composite gas separation membrane comprised of the porous support and the separating layer.

7.   The composite gas separation membrane of Claim 6 in which, with respect to at least one gas of a pair of gases of the gaseous mixture, the material of the in situ-formed intermediate non-porous layer has a higher permeability constant than does the material of the in situ-formed separating layer.

8.   The composite gas separation membrane of Claim 3 in which the porous support first side surface area is comprised of from about 2 to about 50% pores.

9.   The composite gas separation membrane of Claim 3 in which the composite membrane is a film.

10.   The composite gas separation membrane of Claim 2 in which the composite membrane is a hollow fiber.

11.   The composite gas separation membrane of Claim 3 wherein the in situ-formed intermediate non-porous layer has an average dimensional thickness of at least twice that of the average dimensional thickness of the separating layer.

12.    The composite gas separation membrane of Claim 3 wherein the composite gas separation membrane has an additional in situ-formed non-porous layer of the material of the intermediate layer or a different polymeric material layer having permeability for the one gas substantially greater than the permeability of the separating layer and deposited on top of the separating layer.

13.    The composite gas separation membrane of Claim 3 wherein the intermediate non-porous layer has an average dimensional thickness which is equal to or greater than the average pore size of the porous support.

0181850

PRIOR ART
FIG. 1.

PRIOR ART
FIG. 2.

FIG. 3.

FIG. 4.

2/2

PRIOR ART

FIG. 5.

FIG. 6.

European Patent
Office

**EUROPEAN SEARCH REPORT**

0181850
Application number

EP  85 87 0112

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP-A-0 134 055 (SHELL INT. RESEARCH MIJ. BV) (publ. 13/03/1985) * Abstract; claims 1-9; page 3, lines 7-10; page 3, line 21 - page 6, line 16; page 7, lines 1-27 * | 1-4,6-12 | B 01 D 13/04 B 01 D 53/22 |
| A | | 5,13 | |
| | --- | | |
| X | PATENTS ABSTRACTS OF JAPAN, vol. 8, no. 168 (C-236)[1605], 3rd August 1984; & JP - A - 59 66 308 (MATSUSHITA DENKI SANGYO K.K.) 14-04-1984 * Abstract * | 1,3,7-9,12 | |
| Y | IDEM | 5,13 | TECHNICAL FIELDS SEARCHED (Int. Cl.4) |
| A | IDEM | 2,4,6 | B 01 D |
| | --- | | |
| X | PATENTS ABSTRACTS OF JAPAN, vol. 8, no. 225 (C-247)[1662], 16th October 1984; & JP - A - 59 112 802 (MATSUSHITA DENKI SANGYO K.K.) 29-06-1984 * Abstract * | 1,7,9 | |
| A | IDEM | 2-6,8, 10,11, 13 | |
| | --- -/- | | |

The present search report has been drawn up for all claims

| Place of search THE HAGUE | Date of completion of the search 13-12-1985 | Examiner HOORNAERT P.G.R.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## European Patent Office

## EUROPEAN SEARCH REPORT

Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 8, no. 77 (C-218)[1514], 10th April 1984; & JP - A - 59 301 (MATSUSHITA DENKI SANGYO K.K.) 05-01-1984 * Abstract * | 1,3,7, 9,12 | |
| A | IDEM | 2,4-6, 8,10, 11,13 | |
| | --- | | |
| X | EP-A-0 056 512 (BRUNSWICK CORP.) * Abstract; claims 1-3,11-13,30; page 8, lines 14-31; page 12, line 19 - page 13, line 34; page 21, line 25 - page 22, line 15 * | 1 | |
| A | | 2,8,13 | TECHNICAL FIELDS SEARCHED (Int. Cl.4) |
| | --- | | |
| A | EP-A-0 112 134 (SUMITOMO ELECTR. IND. LTD.) * Claims 1-5,7,8; page 15, line 1 - page 16, line 20; page 21, lines 12-19; page 22, lines 11-14; examples 4,8,10,13 * | 1,3,5, 7,9,11 | |
| | --- | | |
| Y | PATENTS ABSTRACTS OF JAPAN, vol. 8, no. 156 (C-234)[1593], 19th July 1984; & JP - A - 59 59 214 (ASAHI GLASS K.K.) 05-04-1984 * Abstract * | 5,13 | |
| | -/- | | |

The present search report has been drawn up for all claims

| Place of search | Date of completion of the search | Examiner |
|---|---|---|
| THE HAGUE | 13-12-1985 | HOORNAERT P.G.R.J. |

## DOCUMENTS CONSIDERED TO BE RELEVANT

Page 3

| Category | Citation of document with indication, where appropriate, of relevant passages | Relevant to claim | CLASSIFICATION OF THE APPLICATION (Int. Cl 4) |
|---|---|---|---|
| A | IDEM | 1,3,7, 9 | |
| | --- | | |
| X | PATENTS ABSTRACTS OF JAPAN, vol. 8, no. 71 (C-217)[1508], 3rd April 1984; & JP - A - 58 223 411 (MATSUSHITA DENKI SANGYO K.K.) 26-12-1983 * Abstract * | 1,7,9, 12 | |
| | --- | | |
| A | | 2-6,10 ,11,13 | |
| | ----- | | |

| | | TECHNICAL FIELDS SEARCHED (Int. Cl.4) |
|---|---|---|

The present search report has been drawn up for all claims

| Place of search THE HAGUE | Date of completion of the search 13-12-1985 | Examiner HOORNAERT P.G.R.J. |
|---|---|---|

EPO Form 1503. 03.82